# EUROPEAN PATENT SPECIFICATION

(11) **EP 3 064 309 B1**
(45) Date of publication and mention of the grant of the patent: **14.02.2018**
(21) Application number: 16158572.4
(22) Date of filing: 03.03.2016
(51) Int. Cl.: B23K 37/053, F03D 13/20, F03D 13/25

(54) **POSITIONING DEVICE AND METHOD FOR ACCURATE MUTUAL ALIGNMENT OF A FIRST AND A SECOND TUBULAR ELEMENT**
POSITIONIERUNGSVORRICHTUNG UND VERFAHREN ZUR GENAUEN GEGENSEITIGEN AUSRICHTUNG EINES ERSTEN UND EINES ZWEITEN ROHRELEMENTS
DISPOSITIF ET PROCÉDÉ DE POSITIONNEMENT POUR UN ALIGNEMENT MUTUEL PRÉCIS D'UN PREMIER ET UN SECOND ÉLÉMENT TUBULAIRE

(30) Priority: 05.03.2015 BE 201505119
(43) Date of publication of application: 07.09.2016
(73) Proprietor: GeoSea NV, 2070 Zwijndrecht (BE)
(72) Inventor: RABAUT, Dieter, B9000 Gent (BE); ROELSTRAETE, Brecht Karl Arnold, B8550 Zwevegem (BE); VAN VELTHOVEN, Stefan Arthur Joan Jozef, B2070 Zwijndrecht (BE)
(74) Representative: Brouwer, Hendrik Rogier

(56) References cited:
- WO-A1-2013/057459
- CA-A1- 2 739 399
- GB-A- 2 515 296
- US-A- 5 560 091
- US-A1- 2012 286 119

## Description

### TECHNICAL FIELD OF THE INVENTION

The invention relates to a positioning device for accurate mutual alignment of a first and a second tubular element along a common axis extending in a longitudinal direction of the two elements for the purpose of coupling these elements. The invention also relates to a method for accurate mutual alignment of first and second tubular elements with the positioning device. The method relates particularly to a device and method for accurate alignment and mounting of a transition piece on a mono-pile foundation of an offshore wind turbine.

The invention will be elucidated hereinbelow with reference to an offshore wind turbine, for which the invention is particularly suitable. The reference to a wind turbine does not imply that the invention is limited to the use in the context of such a wind turbine, and the positioning device and corresponding method can likewise be applied for any other combination of first and second tubular elements to be aligned accurately relative to each other.

### BACKGROUND OF THE INVENTION

An offshore wind turbine is generally placed on a support structure anchored to a seabed. For offshore wind turbines placed in relatively shallow water the support structure can comprise a mono-pile which is arranged in the seabed and extends above the water surface. A lattice structure or jacket can be applied if desired for deeper water. Reference will be made below to a mono-pile, though this can also be understood here to mean a jacket. In order to connect the wind turbine mast to a mono-pile use is made in the prior art of a transition piece. The transition piece is connected on an underside thereof to the mono-pile and on an upper side thereof to the wind turbine mast. The transition piece can if desired be provided with auxiliary constructions such as a platform, a berthing and other useful applications.

In a known method for mounting a transition piece on a mono-pile the transition piece is picked up from a jack-up platform with a crane and the transition piece and the mono-pile are aligned relative to each other along a common axis extending in a longitudinal direction of the two elements for the purpose of coupling the transition piece and the mono-pile. In order to align the transition piece relative to the mono-pile use is for instance made of winch-operated auxiliary cables or tugger lines. In an embodiment a lower collar part of the transition piece can be placed here over at least a portion of the mono-pile, wherein an intermediate space occurs between an inner surface of the transition piece and an outer surface of the mono-pile. This space can subsequently be filled with a curing substance such as mortar or grout. After curing a connection is thus obtained between the transition piece and the mono-pile.

Another method connects the transition piece to the mono-pile by means of a bolt connection. The transition piece and the mono-pile comprise for this purpose transverse surfaces (surfaces running substantially perpendicularly of a longitudinal direction of the relevant part) which comprise bolt holes arranged in a peripheral direction of said transverse surfaces. The bolt holes of the two transverse surfaces have to be accurately aligned to make the connection possible. The alignment produced by the known method is often too inaccurate and much time is lost in making the connection.

Another method disclosed in WO 2013/057459 makes use of adjustable rigid spacers to align a monopile transition piece.

### SUMMARY OF THE INVENTION

The invention has for its object, among others, to provide a positioning device and corresponding method for mutually aligning with greater accuracy than is known a first tubular element (for instance a transition piece) and a second tubular element (for instance a mono-pile) along a common axis extending in a longitudinal direction of the two elements for the purpose of coupling these elements.

This object is achieved according to the invention by providing a positioning device as according to claim 1. The positioning device according to the invention comprises an engaging means with which the device can be rigidly connected to the first element; a translation device which, in the situation where it is connected to the first element, is extendable in a radial direction of the first element to a position against an outer surface of the second element and can exert a radial force thereon whereby the elements are displaced in the radial direction relative to each other; and a rotation device which, in the situation where it is connected to the first element, is extendable in a radial direction of the first element to a position against an outer surface of the second element and can exert a peripheral force thereon whereby the elements are rotated relative to each other in a peripheral direction of the first element. This rotation therefore takes place around an axis running parallel to an axial direction of the first element.

In a particularly suitable embodiment the translation device comprises the rotation device and they form a combined translation-rotation device.

With the invented positioning device a first and a second tubular element can be mutually aligned in accurate and safe manner along a common axis extending in a longitudinal direction of the two elements for the purpose of coupling these elements. With the invented positioning device a transition piece and a mono-pile in particular can be mutually aligned in accurate and safe manner along a common axis extending in a longitudinal direction of the two elements for the purpose of coupling the transition piece to the mono-pile. Provided for this purpose according to the invention is a method which incorporates the following steps of:
- providing a device according to the invention;
- connecting the device rigidly to the first element by means of the engaging means;
- lowering the first element into the vicinity of the second element;
- extending the translation device, in the situation where it is connected to the first element, in a radial direction of the first element to a position against an outer surface of the second element and exerting a radial force thereon, whereby the elements are displaced in the radial direction relative to each other; and
- extending the rotation device, in the situation where it is connected to the first element, in a radial direction of the first element to a position against an outer surface of the second element and exerting a peripheral force thereon, whereby the elements are rotated relative to each other in a peripheral direction of the first element.

A particularly suitable method has the feature that the translation device comprises the rotation device, and the combined translation-rotation device is extended to a position against the outer surface of the second element.

It will be apparent that other elements can also be mutually aligned and coupled in the invented manner, such as for instance a wind turbine mast part to a transition piece or to another wind turbine mast part.

An embodiment of the invention relates to a device wherein transverse surfaces of the first and the second element comprise bolt holes arranged in the peripheral direction, and the device comprises a guide pin which is extendable in the longitudinal direction of the first element and which can connect aligned bolt holes of the first and the second element.

Yet another embodiment according to the invention provides a device, wherein this comprises means to pick up and lower the first element with a skirt portion over at least a portion of the second element. A suitable means with which the first element can be picked up comprises a hoisting crane provided on a jack-up or other platform. The skirt portion of the first element will generally have a greater diameter than the portion of the second element over which the skirt portion is placed. This facilitates 'catching' of the second element by the first element. This is further facilitated in an embodiment of the device by giving a lower edge part of the first element an inner surface with a conical form in the longitudinal direction.

The accuracy of the alignment of the first element relative to the second element is further improved by providing an embodiment wherein the positioning device comprises at least three translation devices disposed in the peripheral direction of the first element. In a further embodiment the least three translation devices can be disposed in the peripheral direction of the first element such that they are distributed in regular manner. In this embodiment the positions of three translation devices make a peripheral angle of 120° with each other.

In order to further increase the accuracy thereof, the positioning device is provided in an embodiment with a marking which co-acts with a marking arranged on the first element. The positioning device can thus be connected in accurate manner to the first element and the position of the positioning device, and so also of the translation and/or rotation devices, can be accurately determined at all times from a position determination of the first element.

A particularly useful embodiment of the positioning device is characterized in that at least one of the engaging means, the translation device and the rotation device comprises a hydraulic system which is connected to a hydraulic circuit and can be remotely controlled. In this embodiment the positioning device can be operated from a position above water, for instance from a jack-up or other platform.

According to an embodiment of the device, the engaging means with which the positioning device is connected to the first element comprises a clamping plate which can be moved against a wall part of the first element with a hydraulic cylinder incorporated in the hydraulic circuit.

According to another embodiment of the device, the translation and/or the rotation device comprises a wheel element which can be moved against a wall part of the second element with a hydraulic cylinder incorporated in the hydraulic circuit and can exert a radial force and/or a peripheral force thereon. The device preferably comprises a motor here for rotatingly driving the wheel element and exerting the peripheral force. In order to enable a peripheral force to be exerted on a collar part of the second element it is recommended that the rotation axis of the wheel element runs substantially parallel to the longitudinal direction of the second (and first) element (the plane of the wheel element then runs substantially perpendicularly of the longitudinal direction of the elements). It is also possible for the rotation axis of the wheel element to run at an angle differing from zero to the said longitudinal direction, for instance an angle between 0° and 85°. This can facilitate simultaneous lowering and rotating of the first element relative to the second element. It will be apparent that a rotation axis of the wheel element running perpendicularly of said longitudinal direction is less suitable because this cannot generate a rotation around an axis running parallel to the longitudinal direction.

Particularly suitable embodiments comprise positioning devices wherein the second element is stationary and the first element is placed on or partially over the second element, more particularly wherein the second element comprises the mono-pile or jacket and the first element comprises a transition piece of an offshore wind turbine.

Another aspect of the invention relates to a method for accurate mutual alignment of a first and a second tubular element along a common axis extending in a longitudinal direction of the two elements for the purpose of coupling these elements, which method has already been briefly described above.

Suitable embodiments of the invention comprise a method wherein transverse surfaces of the first and the second element comprise bolt holes arranged in the peripheral direction, the device comprises a guide pin extendable in the longitudinal direction of the first element and the guide pin is extended and connects aligned bolt holes of the first and the second element.

Once the connection between the first and the second element has been effected by the guide pin, in another embodiment of the method the translation device and/or the rotation device, in the situation where it is connected to the first element, is retracted in a radial direction of the first element so that it moves clear of the outer surface of the second element, the first element is lowered over at least a portion of the second element until the transverse surfaces have moved close to each other, and the transverse surfaces are connected by means of bolts.

There are further advantages when at least one of the engaging means, the translation device and the rotation device are remotely controlled hydraulically.

The invented method is particularly suitable in a situation in which the second element is stationary and the first element is placed on or partially over the second element. This applies for instance when the second element comprises the mono-pile or jacket of an offshore wind turbine and the first element comprises a transition piece of said offshore wind turbine.

It is stated expressly that the embodiments of the invention described in this patent application can be combined in any possible combination of these embodiments, and that each embodiment can individually form the subject-matter of a divisional patent application.

### BRIEF DESCRIPTION OF THE FIGURES

The invention will now be further elucidated on the basis of the following figures and description of a preferred embodiment, without the invention otherwise being limited thereto. In the figures:
Figure 1 is a schematic perspective view of an offshore wind turbine with a detail of a transition piece;
Figure 2 shows schematically an embodiment of a transition piece of a wind turbine connected to a mono-pile:
Figure 3 is a schematic perspective view of an embodiment of the positioning device according to the invention;
Figure 4 is a schematic cross-section of the embodiment of the positioning device according to the invention shown in figure 3 in the situation connected to a transition piece;
Figure 5A is a schematic side view of the embodiment of the positioning device according to the invention shown in figure 3;
Figure 5B is a schematic bottom view of the embodiment of the positioning device according to the invention shown in figure 3;
Figure 5C is a schematic top view of the embodiment of the positioning device according to the invention shown in figure 3; and
Figures 6A-6F show in schematic manner different steps of an embodiment of the method according to the invention.

### DESCRIPTION OF EXEMPLARY EMBODIMENTS

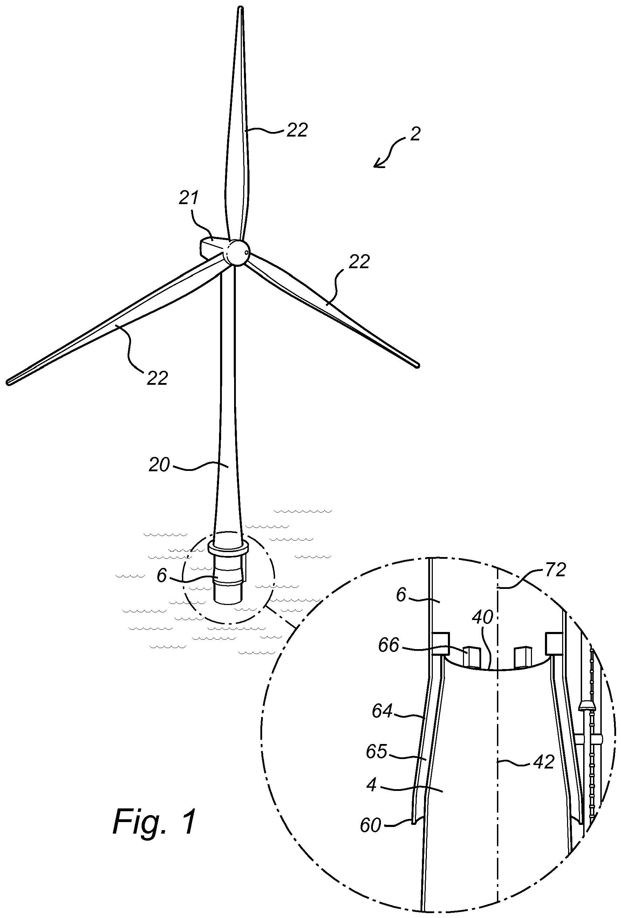

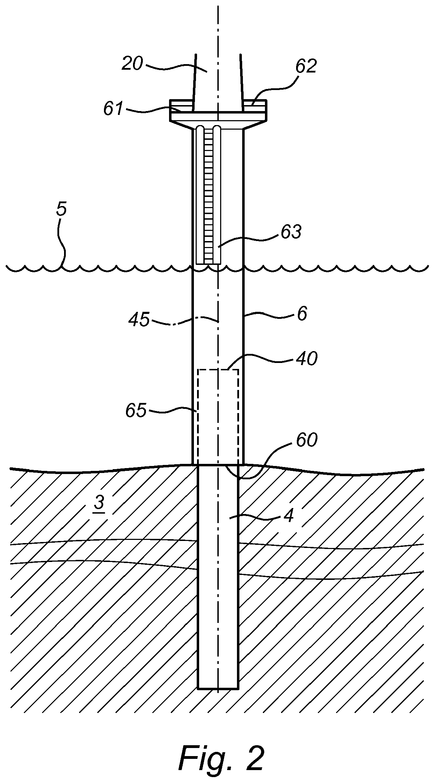

Shown with reference to figure 1 is an offshore wind turbine 2. Turbine 2 comprises a turbine mast 20 which is provided on an upper side with a nacelle 21 and a number of rotor blades 22. As also shown in figure 2, such a wind turbine 2 is generally placed on a support structure anchored to a seabed 3 in the form of a mono-pile 4. Mono-pile 4 forms a tubular element and can extend from seabed 3 to a position above water surface 5, although an upper edge 40 thereof can also be located underwater as shown in figure 2. In order to connect wind turbine mast 20 to a mono-pile 4 use is generally made of a transition piece 6. Transition piece 6 likewise forms a tubular element and extends from a lower transverse surface 60 to an upper transverse surface 61. As shown in detail in figure 1, transition piece 6 can be provided with a skirt portion 64 which is placed over at least a part of mono-pile 4, wherein an intermediate space 65 occurs between an inner surface of transition piece (6, 64) and an outer surface of mono-pile 4. The height of intermediate space 65 can if desired be determined by providing an inner surface of transition piece (6, 64) with protrusions 66 which support on an upper edge 40 of mono-pile 4. The space 65 can then be filled with a curing substance such as mortar or grout. After curing a connection is thus obtained between transition piece 6 and mono-pile 4. Transition piece 6 can if desired be provided with auxiliary constructions such as a platform 62 or a boat ladder 63.

In the above described method the transition piece 6 is picked up from a jack-up platform (not shown) with a crane (not shown) and transition piece 6 and mono-pile 4 are mutually aligned to a certain extent along a common axis 45 extending in a longitudinal direction of the two elements for the purpose of coupling transition piece 6 and mono-pile 4. The alignment of transition piece 6 relative to mono-pile 4 is carried out for instance by winch-operated auxiliary cables or tugger lines. Transition piece 6 is hereby held in place and aligned to certain extent with mono-pile 4.

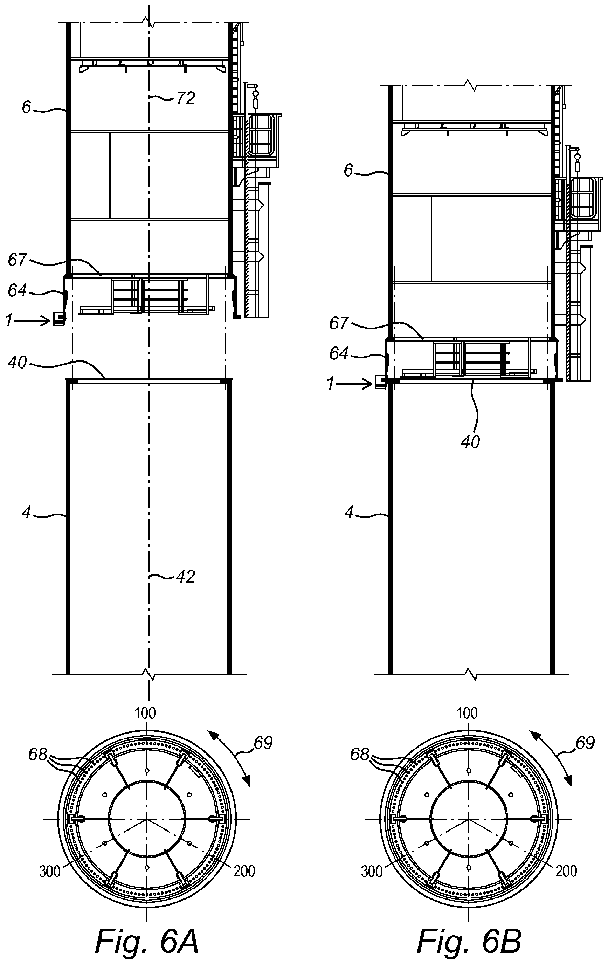

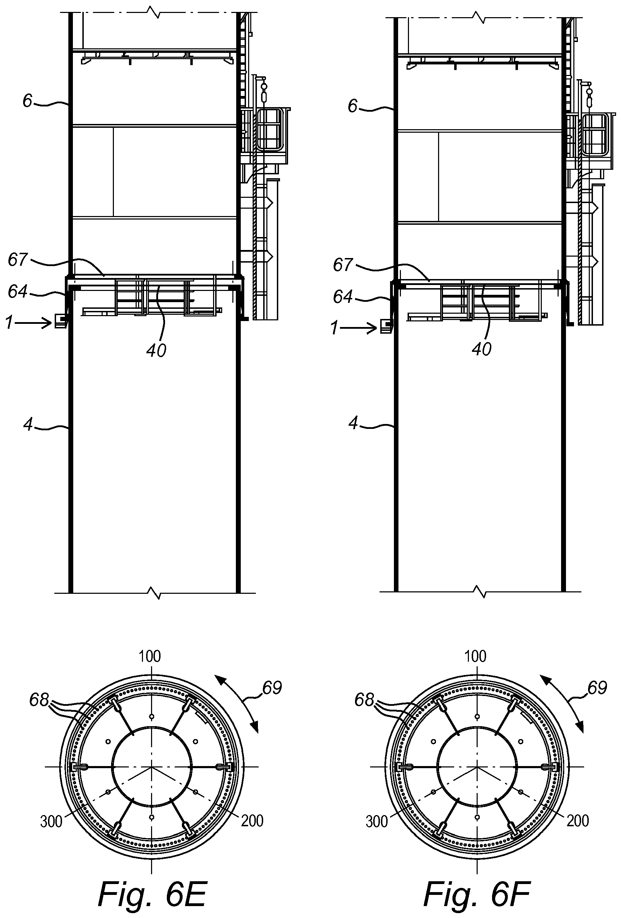

Transition piece 6 can also be connected to mono-pile 4 by means of a bolt connection. As shown in figures 6A-6F, transition piece 6 and mono-pile 4 comprise for this purpose transverse surfaces 67 and 40 (surfaces running substantially perpendicularly of a longitudinal direction 72 and 42 of the relevant part) which are embodied as flanges and which comprise bolt holes 68 arranged in a peripheral direction 69 of said transverse surfaces (67, 40). The for instance 120 bolt holes 68 of the two transverse surfaces (67, 40) have to be accurately aligned in order to make the bolt connection possible. In an accurately aligned situation the longitudinal direction 72 of transition piece 6 and the longitudinal direction 42 of mono-pile 4 substantially coincide with the common axis 45 (figure 2). Positioning device 1 according to the invention provides a solution allowing an accurate alignment.

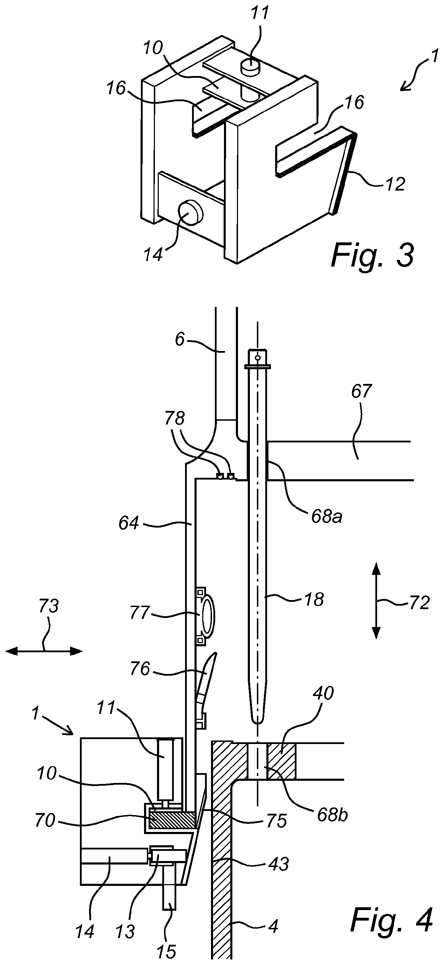

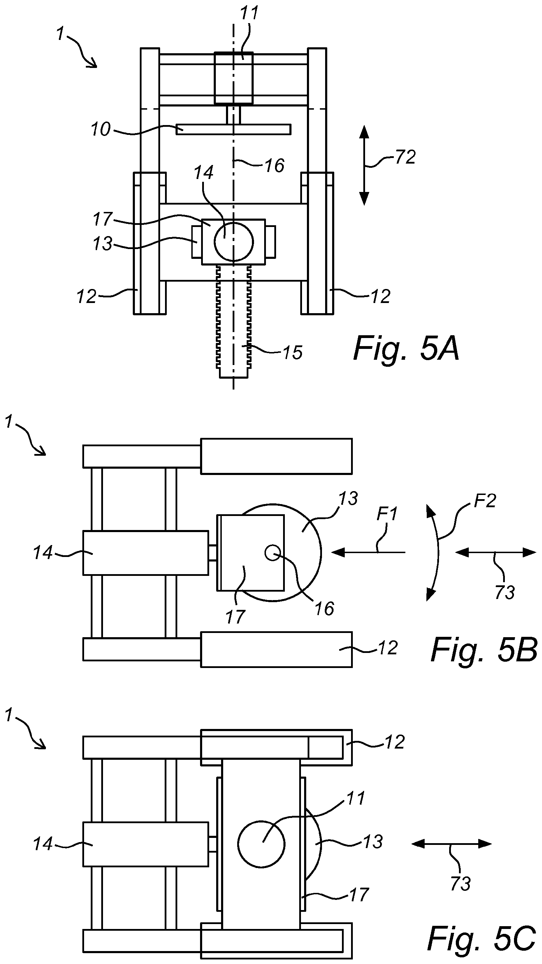

An embodiment of positioning device 1 is shown in figures 3 and 5A-5C, and comprises a housing in which is received, among other parts, an engaging means (10, 11) with which device 1 can be rigidly connected to transition piece 6. The housing is provided if desired with a marking (not shown) which co-acts with a marking arranged on the transition piece in order to enable mounting of the device at the correct location.

Engaging means (10, 11) comprises in the shown embodiment a clamping plate 10 which can be moved with a hydraulic cylinder 11 incorporated in a hydraulic circuit (not shown) against a radially protruding wall part 70 of skirt portion 64 of transition piece 6 so as to clamp round it. The housing is provided with an opening 16 in which wall part 70 can be received. One or more positioning devices 1 can in this way be attached in simple manner to a lower edge of transition piece 6, as shown schematically in figure 4. A front edge of the housing facing toward mono-pile 4 during use is provided with a protective layer 12 of a soft material such as rubber in order to reduce the risk of damage to mono-pile 4.

Positioning device 1 further comprises a translation device (13, 14, 15, 16, 17) which, in the situation where it is connected to transition piece 6, is extendable in a radial direction 73 of transition piece 6 to a position against an outer surface 43 of mono-pile 4 (see figure 4) and can exert a radial force thereon whereby the transition piece 6 suspended from a crane is displaced in the radial direction relative to mono-pile 4 until a proper alignment is reached. In the shown embodiment the translation device also comprises a rotation device, thus forming a combined translation-rotation device.

The combined translation-rotation device comprises a wheel element 13 which can be moved against outer surface 43 of mono-pile 4 with a hydraulic cylinder 14 incorporated in the hydraulic circuit (not shown) and can exert a radial force F1 and a peripheral force F2 thereon (see figure 5B). Wheel element 13 is received for this purpose in a wheel housing 17 for rotation about a rotation axis 16 and is driven rotatingly by a motor 15. Rotation axis 16 of wheel element 13 runs substantially parallel to the longitudinal direction 72 of transition piece 6. Hydraulic cylinders (11, 14) are incorporated in a hydraulic circuit (not shown) which can be controlled from for instance a jack-up platform.

In figure 4 can further be seen that a lower edge part of skirt portion 64 of transition piece 6 comprises an inner surface 75 of conical form in the longitudinal direction 72 which is provided if desired with a protective layer of a soft material such as rubber. In order to avoid seawater seeping into space 65 between transition piece 6 and mono-pile 4 during alignment and thereafter, transition part 6 (or skirt portion 64 thereof) can be provided on an inner side with a rubber seal 76, with an inflatable rubber seal and/or with rubber sealing strips 78.

Positioning device 1 can further comprise one or more guide pins 18 extendable in longitudinal direction 72 of transition piece 6. For instance six guide pins 18 are distributed regularly in peripheral direction 69 over the periphery of the transverse surface 67 for coupling and run through six bolt holes 68a of transverse surface 67. Guide pins 18 can be moved up and downward in longitudinal direction 72 of transition piece 6 using hydraulic cylinders (not shown) incorporated in the hydraulic circuit, wherein aligned bolt holes (68a, 68b) of respectively transition piece 6 and mono-pile 4 can be mutually connected. Figure 4 shows a position of a guide pin 18 in which the connection between bolt holes 68a and 68b has not yet been made. This will take place when guide pins 18 descend further.

Positioning devices 1 can be applied as follows during alignment and mounting of a transition piece 6 on a mono-pile 4.

A number of translation-rotation devices (1, 13, 14, 15, 16, 17) are first of all fixed to a lower edge of transition piece 6 by means of engaging means (10, 11). This can take place for instance by disposing three such devices at an intermediate angle of 120° in the peripheral direction 69 of transition piece 6, as shown schematically in figures 6A-6F, whereby lines of action (100, 200, 300) of respectively a first, a second and a third translation-rotation device (1, 13, 14, 15, 16, 17) are indicated. A line of action (100, 200, 300) here indicates the translation direction of a wheel element 13.

Transition piece 6 is then lowered on a crane (not shown) operating from a jack-up platform into the vicinity of the mono-pile 4 anchored in seabed 3 (figure 6A). As it is lowered further, mono-pile 4 is at a certain moment 'caught' by the conical inner surface 75 of transition piece 6 (figure 6B).

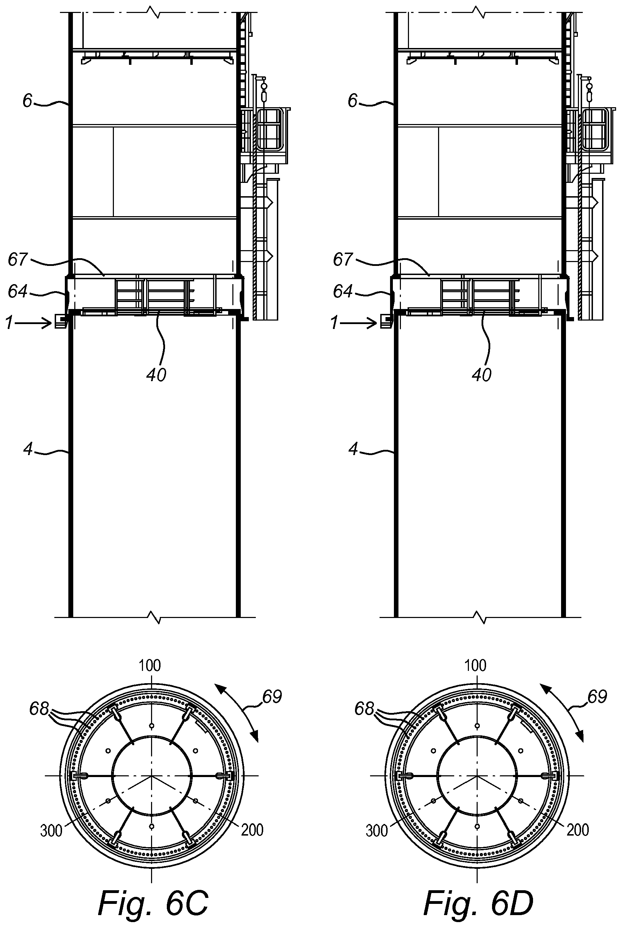

Transition piece 6 is subsequently lowered further until the translation-rotation devices (1, 13, 14, 15, 16, 17) are located at a height lying below the transverse surface 40 of mono-pile 4 to be coupled to transverse surface 67 of transition piece 6 (figure 6C).

At this moment wheel elements 13 of translation-rotation devices (1, 13, 14, 15, 16, 17) are extended in a radial direction 73 for the associated translation-rotation device using hydraulic cylinders 14 to a position against outer surface 43 of mono-pile 4. A radial force F1 is hereby exerted on mono-pile 4, whereby the suspended transition piece 6 can be displaced in the radial directions 73 relative to mono-pile 4 until a proper alignment is reached. Because the position of mono-pile 4 and that of translation-rotation devices (1, 13, 14, 15, 16, 17) are known, an accurate calculation can be made of how far wheel elements 13 of the three translation-rotation devices (1, 13, 14, 15, 16, 17) must be extended or retracted. Wheel elements 13 are simultaneously driven rotatingly by motors 15, wherein a peripheral force F2 is exerted on outer surface 43 of mono-pile 4, whereby the suspended transition piece 6 can be rotated in peripheral direction 69 about longitudinal direction 72 relative to mono-pile 4 until a proper alignment is reached between opposite bolt holes (68a, 68b). In order to fix the alignment the guide pins 18 are subsequently extended hydraulically in downward direction until a number of aligned bolt holes 68a of transition piece 6 and mono-pile 4 are mutually connected (figure 6D).

In a subsequent step wheel elements 13 of translation-rotation devices (1, 13, 14, 15, 16, 17) are retracted again in a radial direction 73 for the associated translation-rotation device using hydraulic cylinders 14 so that wheel elements 13 move clear of outer surface 43 of mono-pile 4. Transition piece 6 is then lowered further, wherein transition piece 6 is coupled by means of guide pins 18 to mono-pile 4, whereby the proper alignment is maintained (figure 6E).

In a final step transition piece 6 is lowered over at least a portion of mono-pile 4 until the transverse surfaces (40, 67) for coupling have moved close to each other, and transverse surfaces (40, 67) are mutually connected with bolts.

## Claims

1. Positioning device (1) for accurate mutual alignment of a first and a second tubular element along a common axis extending in a longitudinal direction of the two elements for the purpose of coupling these elements, wherein the positioning device comprises:
- an engaging means (10,11) with which the device can be rigidly connected to the first element;
- a translation device which, in the situation where it is connected to the first element, is extendable in a radial direction of the first element to a position against an outer surface of the second element and can exert a radial force thereon whereby the elements are displaced in the radial direction relative to each other; and
- a rotation device which, in the situation where it is connected to the first element, is extendable in a radial direction of the first element to a position against an outer surface of the second element and can exert a peripheral force thereon whereby the elements are rotated relative to each other in a peripheral direction of the first element.

2. Device as claimed in claim 1, wherein the translation device comprises the rotation device and forms a combined translation-rotation device.

3. Device as claimed in claim 1 or 2, wherein transverse surfaces of the first and the second element comprise bolt holes arranged in the peripheral direction, and the device comprises a guide pin which is extendable in the longitudinal direction of the first element and which can connect aligned bolt holes of the first and the second element.

4. Device as claimed in any of the foregoing claims, wherein it further comprises means to pick up and lower the first element with a skirt portion over at least a portion of the second element.

5. Device as claimed in any of the foregoing claims, wherein a lower edge part of the first element comprises an inner surface with a conical form in the longitudinal direction.

6. Device as claimed in any of the foregoing claims, wherein it comprises at least three translation devices disposed in the peripheral direction of the first element.

7. Device as claimed in any of the foregoing claims, wherein it is provided with a marking which co-acts with a marking arranged on the first element.

8. Device as claimed in any of the foregoing claims, wherein at least one of the engaging means, the translation device and the rotation device comprises a hydraulic circuit which can be remotely controlled.

9. Device as claimed in claim 8, wherein the engaging means comprises a clamping plate which can be moved against a wall part of the first element with a hydraulic cylinder incorporated in the hydraulic circuit.

10. Device as claimed in claim 8 or 9, wherein the translation and/or the rotation device comprises a wheel element which can be moved against a wall part of the second element with a hydraulic cylinder incorporated in the hydraulic circuit and can exert a radial force and/or a peripheral force thereon.

11. Device as claimed in claim 10, wherein it comprises a motor for rotatingly driving the wheel element and exerting the peripheral force.

12. Device as claimed in any of the foregoing claims, wherein the second element is stationary and the first element is placed on or partially over the second element.

13. Device as claimed in any of the foregoing claims, wherein the second element comprises the mono-pile or jacket and the first element comprises a transition piece of an offshore wind turbine.

14. Method for accurate mutual alignment of a first and a second tubular element along a common axis extending in a longitudinal direction of the two elements for the purpose of coupling these elements, wherein the method comprises of:
- providing a device as claimed in any of the foregoing claims;
- connecting the device rigidly to the first element by means of the engaging means;
- lowering the first element into the vicinity of the second element;
- extending the translation device, in the situation where it is connected to the first element, in a radial direction of the first element to a position against an outer surface of the second element and exerting a radial force thereon, whereby the elements are displaced in the radial direction relative to each other; and
- extending the rotation device, in the situation where it is connected to the first element, in a radial direction of the first element to a position against an outer surface of the second element and exerting a peripheral force thereon, whereby the elements are rotated relative to each other in a peripheral direction of the first element.

15. Method as claimed in claim 14, wherein the second element comprises the mono-pile or jacket and the first element comprises a transition piece of an offshore wind turbine.

## Patentansprüche

1. Positioniereinheit (1) zur genauen gegenseitigen Ausrichtung eines ersten und zweiten rohrförmigen Elements entlang einer gemeinsamen Achse, die sich in Längsrichtung der beiden Elemente erstreckt, um diese Elemente zu verbinden, wobei die Positioniereinheit aufweist:
- ein Haltemittel (10, 11), mit dem die Einheit fest mit dem ersten Element verbunden werden kann;
- eine Übersetzungseinheit, die, wenn sie mit dem ersten Element verbunden ist, in radialer Richtung des ersten Elements in eine Stellung gegen eine äußere Fläche des zweiten Elements ausziehbar ist und eine Radialkraft darauf ausüben kann, wobei die Elemente in radialer Richtung relativ zueinander verschoben werden; und
- eine Dreheinheit, die, wenn sie mit dem ersten Element verbunden ist, in radialer Richtung des ersten Elements in eine Stellung gegen eine äußere Fläche des zweiten Elements ausziehbar ist und eine periphere Kraft darauf ausüben kann, wobei die Elemente in peripherer Richtung des ersten Elements relativ zueinander gedreht werden.

2. Einheit nach Anspruch 1, wobei die Übersetzungseinheit die Dreheinheit aufweist und eine kombinierte Übersetzungs-/Dreheinheit bildet.

3. Einheit nach Anspruch 1 oder 2, wobei Querflächen des ersten und des zweiten Elements Bolzenlöcher aufweisen, die in peripherer Richtung angeordnet sind, und wobei die Einheit einen Führungsstift aufweist, der in Längsrichtung des ersten Elements ausziehbar ist und der ausgerichtete Bolzenlöcher des ersten und des zweiten Elements verbinden kann.

4. Einheit nach einem der vorherigen Ansprüche, wobei die Einheit weiterhin ein Mittel zum Anheben und Absenken des ersten Elements mit einem Randteil über mindestens einem Teil des zweiten Elements aufweist.

5. Einheit nach einem der vorherigen Ansprüche, wobei ein niedriger Randteil des ersten Elements eine Innenfläche mit konischer Form in Längsrichtung aufweist.

6. Einheit nach einem der vorherigen Ansprüche, wobei die Einheit mindestens drei Übersetzungseinheiten aufweist, die in peripherer Richtung des ersten Elements angeordnet sind.

7. Einheit nach einem der vorherigen Ansprüche, wobei die Einheit mit einer Markierung versehen ist, die mit einer auf dem ersten Element angeordneten Markierung zusammenwirkt.

8. Einheit nach einem der vorherigen Ansprüche, wobei mindestens entweder das Haltemittel, die Übersetzungseinheit oder die Dreheinheit einen Hydraulikkreislauf aufweist, der ferngesteuert werden kann.

9. Einheit nach Anspruch 8, wobei das Haltemittel eine Spannplatte aufweist, die mit einem in den Hydraulikkreislauf integrierten Hydraulikzylinder gegen einen Wandteil des ersten Elements bewegt werden kann.

10. Einheit nach Anspruch 8 oder 9, wobei die Übersetzungs- und/oder Dreheinheit ein Radelement aufweisen bzw. aufweist, das mit einem in den Hydraulikkreislauf integrierten Hydraulikzylinder gegen einen Wandteil des zweiten Elements bewegt werden und eine Radialkraft und/oder eine periphere Kraft darauf ausüben kann.

11. Einheit nach Anspruch 10, wobei die Einheit einen Motor zum Drehantrieb des Radelements und Ausüben der peripheren Kraft aufweist.

12. Einheit nach einem der vorherigen Ansprüche, wobei das zweite Element feststehend ist und das erste Element auf oder teilweise über dem zweiten Element platziert wird.

13. Einheit nach einem der vorherigen Ansprüche, wobei das zweite Element den Monopile oder das Jacket aufweist und das erste Element ein Übergangsteil einer Offshore-Windkraftanlage aufweist.

14. Verfahren zum genauen gegenseitigen Ausrichten eines ersten und eines zweiten rohrförmigen Elements entlang einer gemeinsamen Achse, die sich in Längsrichtung der beiden Elemente erstreckt, um diese Elemente zu verbinden, wobei das Verfahren aufweist:
- Bereitstellen einer Einheit nach einem der vorherigen Ansprüche;
- festes Verbinden der Einheit mit dem ersten Element durch das Haltemittel;
- Absenken des ersten Elements in die Nähe des zweiten Elements;
- Ausfahren der Übersetzungseinheit, wenn diese mit dem ersten Element verbunden ist, in radialer Richtung des ersten Elements in eine Stellung gegen eine äußere Fläche des zweiten Elements und Ausüben einer Radialkraft darauf, wobei die Elemente in radialer Richtung relativ zueinander verschoben werden; und
- Ausfahren der Dreheinheit, wenn diese mit dem ersten Element verbunden ist, in radialer Richtung des ersten Elements in eine Stellung gegen eine äußere Fläche des zweiten Elements und Ausüben einer peripheren Kraft darauf, wobei die Elemente in peripherer Richtung des ersten Elements relativ zueinander gedreht werden.

15. Verfahren nach Anspruch 14, wobei das zweite Element den Monopile oder das Jacket aufweist und das erste Element ein Übergangsteil einer Offshore-Windkraftanlage aufweist.

## Revendications

1. Dispositif de positionnement (1) en vue de l'alignement mutuel précis d'un premier et d'un deuxième élément tubulaire suivant un axe commun s'étendant dans une direction longitudinale des deux éléments dans le but de coupler ces éléments, étant entendu que le dispositif de positionnement comprend :
- un moyen d'emboîtement (10, 11) avec lequel le dispositif peut être relié de façon rigide au premier élément ;
- un dispositif de translation qui, dans la situation où il est relié au premier élément, est extensible dans une direction radiale du premier élément jusqu'à une position située contre une surface externe du deuxième élément et peut exercer une force radiale sur elle, de sorte que les éléments soient déplacés dans la direction radiale l'un par rapport à l'autre, et
- un dispositif de mise en rotation qui, dans la situation où il est relié au premier élément, est extensible dans une direction radiale du premier élément jusqu'à une position située contre une surface externe du deuxième élément et peut exercer une force périphérique sur elle, de sorte que les éléments sont mis en rotation l'un par rapport à l'autre dans une direction périphérique du premier élément.

2. Dispositif selon la revendication 1, étant entendu que le dispositif de translation comprend le dispositif de mise en rotation et forme un dispositif de translation-rotation combinée.

3. Dispositif selon la revendication 1 ou 2, étant entendu que les surfaces transversales du premier et du deuxième élément comprennent des trous à boulon agencés dans la direction périphérique et que le dispositif comprend une broche de guidage qui est extensible dans la direction longitudinale du premier élément et qui peut relier les trous à boulon alignés du premier et du deuxième élément.

4. Dispositif selon l'une quelconque des revendications précédentes, étant entendu qu'il comprend par ailleurs des moyens pour lever et abaisser le premier élément, une partie formant jupe sur au moins une partie du deuxième élément.

5. Dispositif selon l'une quelconque des revendications précédentes, étant entendu qu'une partie formant bord inférieur du premier élément comprend une surface interne de forme conique dans la direction longitudinale.

6. Dispositif selon l'une quelconque des revendications précédentes, étant entendu qu'il comprend au moins trois dispositifs de translation disposés dans la direction périphérique du premier élément.

7. Dispositif selon l'une quelconque des revendications précédentes, étant entendu qu'il est pourvu d'un marquage qui coopère avec un marquage agencé sur le premier élément.

8. Dispositif selon l'une quelconque des revendications précédentes, étant entendu qu'au moins le moyen d'emboîtement, le dispositif de translation ou le dispositif de mise en rotation comprend un circuit hydraulique qui peut être commandé à distance.

9. Dispositif selon la revendication 8, étant entendu que le moyen d'emboîtement comprend une plaque de serrage qui peut être déplacée contre une partie formant paroi du premier élément avec un vérin hydraulique incorporé au circuit hydraulique.

10. Dispositif selon la revendication 8 ou 9, étant entendu que le dispositif de translation et/ou de mise en rotation comprend un élément formant roue qui peut être amené contre une partie formant paroi du deuxième élément avec un vérin hydraulique incorporé au circuit hydraulique et peut exercer une force radiale et/ou une force périphérique sur elle.

11. Dispositif selon la revendication 10, étant entendu qu'il comprend un moteur pour entraîner en rotation l'élément formant roue et pour exercer la force périphérique.

12. Dispositif selon l'une quelconque des revendications précédentes, étant entendu que le deuxième élément est fixe et que le premier élément est placé sur ou partiellement par-dessus le deuxième élément.

13. Dispositif selon l'une quelconque des revendications précédentes, étant entendu que le deuxième élément consiste dans le monopieu ou la tour-treillis (*jacket*) et que le premier élément consiste en une pièce de transition d'une turbine éolienne offshore.

14. Procédé d'alignement mutuel précis d'un premier et d'un deuxième élément tubulaire suivant un axe commun s'étendant dans une direction longitudinale des deux éléments dans le but de coupler ces éléments, étant entendu que le procédé consiste :
- à mettre à disposition un dispositif selon l'une quelconque des revendications précédentes ;
- à relier le dispositif de façon rigide au premier élément au moyen du moyen d'emboîtement ;
- à abaisser le premier élément à proximité du deuxième élément ;
- à étendre le dispositif de translation, dans la situation où il est relié au premier élément, dans une direction radiale du premier élément jusqu' à une position située contre une surface externe du deuxième élément et à exercer une force radiale sur elle, de sorte que les éléments soient déplacés dans la direction radiale l'un par rapport à l'autre, et
- à étendre le dispositif de mise en rotation, dans la situation où il est relié au premier élément, dans une direction radiale du premier élément jusqu'à une position située contre une surface externe du deuxième élément et à exercer une force périphérique sur elle, de sorte que les éléments soient mis en rotation l'un par rapport à l'autre dans une direction périphérique du premier élément.

15. Procédé selon la revendication 14, étant entendu que le deuxième élément consiste dans le monopieu ou la tour-treillis et que le premier élément consiste en une pièce de transition d'une turbine éolienne offshore.
